# EUROPEAN PATENT APPLICATION

(11) **EP 4 170 213 A1**
(43) Date of publication of application: **26.04.2023**
(21) Application number: 21203447.4
(22) Date of filing: 19.10.2021
(51) Int. Cl.: F16L 1/16, F16L 1/26, F16L 47/03, F16L 47/30, F03D 80/00, E02F 5/10, F03D 9/19, F03D 13/25, F03D 80/80, F16L 1/12, F16L 41/06

(54) **SUBSEA PIPELINE CONNECTOR APPARATUS**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

The invention describes a subsea pipeline connector apparatus (1) for connecting subsea feeder lines (2F) to a main pipeline (2P), comprising a means of conveying the pipeline connector apparatus (1) to a feeder line connection site (20) of the main pipeline (2P); a handling means (10) configured to arrange a first end of a feeder line (2F) to abut the main pipeline (2P) at the connection site (20); and a connecting means (14) realised to connect a coupler (21) at the junction of that feeder line (2F) and the main pipeline (2P). The invention further describes a method of connecting a number of subsea feeder lines (2F) to a main pipeline (2P) using the subsea pipeline connector apparatus (1).

## Description

### Background

Wind turbines are traditionally used to generate electrical power which is exported to a grid for consumption, so that the operator receives revenue from the sale of electrical power. However, another use of a wind energy plant is to use the generated electricity locally to drive an electrolytic plant (comprising one or more electrolytic cells) in order to obtain one or more commercially valuable gases. For a small-scale onshore wind turbine or an offshore wind turbine that is close to the mainland, it is relatively straightforward to transport an output gas from the electrolytic plant to a consumer.

However, an offshore wind energy plant can be located far away from the mainland and/or in deep water. A wind energy plant or wind farm can comprise many wind turbines, each of which can generate DC power to drive an electrolytic plant. In the following, an electrolytic plant that is powered by a wind turbine is referred to as a "wind-driven electrolytic plant".

It is necessary to connect the feeder line or output line of each wind-driven electrolytic plant to a main pipeline, which will generally be arranged on or under the seabed. It is known to use a subsea "plough" to assist in laying a pipeline and simultaneously burying it at least partially under the seabed. For example, it is known to use a subsea plough to lay a gas pipeline between a subsea wellhead and an onshore processing facility.

However, it is significantly more complex to connect the feeder lines of multiple wind-driven electrolytic plants to a single subsea gas pipeline. This is because each feeder line must be connected to the main pipeline at the level of the seabed. In one approach, the main pipeline is laid in advance, and the feeder lines of the electrolytic plants are also prepared in advance. For example, a feeder line is arranged to extend some distance from the base of the supporting structure of the offshore wind turbine, so that it can later be connected to the main pipeline. One end of a feeder line can be raised to the required height using a messenger wire, winch etc. so that the feeder line can later be connected to the electrolytic plant. In a subsequent stage, divers descend to the level of the seabed and connect the other end of the feeder line to the main pipeline. These steps are repeated for each wind turbine of the wind farm. Because such wind farms are generally located in deep water, this is a hazardous, time-consuming and expensive procedure.

It is therefore an object of the invention to provide a more economical way of connecting a feeder line to a subsea gas pipeline.

This object is achieved by the claimed subsea pipeline connector apparatus, and by the claimed method of connecting a number of subsea feeder lines to a main pipeline using such a subsea pipeline connector apparatus.

### Description

According to the invention, the subsea pipeline connector apparatus is used for connecting subsea feeder lines to a main pipeline and comprises a means of conveying the autonomous apparatus to a feeder line connection site of the main pipeline; a handling means configured to arrange a first end (or "lower end") of a feeder line to abut the main pipeline at the connection site; and a connecting means realised to join that feeder line to the main pipeline.

A feeder line shall be understood to be a pipeline that is used to connect an offshore facility to the main pipeline. Any number of such feeder lines can connect to a main pipeline. The main pipeline and feeder lines may be understood to transport gas, for example to transport gas from offshore facilities to the mainland, or vice versa.

An advantage of the inventive subsea pipeline connector apparatus is that the feeder lines of offshore facilities can be connected in an economical and safe procedure to the main pipeline.

The main pipeline can be laid in a procedure that precedes the steps of joining feeder lines to the main pipeline. Of course, feeder lines can be connected immediately after laying the main pipeline to the respective connection sites, so that the main pipeline is laid and connected to the feeder lines in essentially one procedure.

The inventive method comprises the steps of conveying the autonomous apparatus to a feeder line connection site of the main pipeline; operating the handling means to arrange a first end of the feeder line to abut the main pipeline at the connection site; and operating the connecting means to join that feeder line to the main pipeline.

The inventive method facilitates a completely automated installation procedure for joining one or more feeder lines to a main pipeline at the seabed, and can complete the steps of this procedure without requiring human intervention.

The object of the invention is also achieved by a computer program product with a computer program that is directly loadable into the memory of a control unit of the inventive subsea pipeline connector apparatus, and which comprises program units to perform the steps of the inventive method when the program is executed by the control unit.

Particularly advantageous embodiments and features of the invention are given by the dependent claims, as revealed in the following description. Features of different claim categories may be combined as appropriate to give further embodiments not described herein.

In the following, it may be assumed that the pipelines - main pipeline and feeder lines - are intended to transport gas. A gas pipeline can be a HDPE pipe, for example, since HDPE pipes are robust, with a relatively low flexibility and a large bending radius. A subsea feeder line shall be understood to connect the main pipeline and an offshore facility such as an offshore gas production facility. An example of such a facility can be a wind-driven electrolysis plant, i.e. an electrolysis plant that is powered by electricity generated by a wind turbine. Such a wind turbine may be assumed to be configured to provide a DC voltage to the electrolysis plant, which can comprise a plurality of electrolytic cells realised to decompose a compound into one or more gases. For example, an electrolysis plant may be used to decompose water into hydrogen and oxygen. The hydrogen may be collected for export through the main pipeline to an onshore facility. A wind farm with a plurality of wind turbines may supply an onshore ammonia manufacturing facility with hydrogen, for example. Equally, a main pipeline may transport gas between one or more offshore facilities.

The handling means of the inventive apparatus can be realised in any suitable manner. In the following, without restricting the invention in any way, it may be assumed that the handling means comprises an articulated arm such as a robotic arm, with one or more end effectors. For example, one end effector can be a gripper that is configured to be able to grip and hold a feeder line. The same end effector or a different end effector may be realised to manipulate a coupler such as an electrofusion T-connector and to arrange this in place about the main pipeline and the first end of a feeder line.

A feeder line can be joined to the main pipeline in any suitable manner, with a main criterion being that the joint must be airtight. For example, a feeder line can be joined to the main pipeline by means of an electrofusion coupler. Such a coupler can be provided in the form of a T-shaped part with one opening that fits about the first end of a feeder line, and a cylindrical body that fits about the main pipeline. Each of three circular openings of the coupler can be provided with an embedded metal coil. When an electric current is applied to the coil, the ensuing heat melts the material of the coupler and pipe and effectively forms a bond between them.

The connecting means can be realised as an assembly of one or more suitable end effectors, for example a means of applying an electric current to a metal coil embedded in an electrofusion coupler.

At the connection site between the main pipeline and a feeder line, the main pipeline is initially "closed", i.e. an opening must be formed in the main pipeline to allow a gas to be transferred between main pipeline and feeder line. In a preferred embodiment of the invention, the connector apparatus is realised to form such an opening at the junction between a feeder line and the main pipeline. To this end, the connector apparatus preferably comprises a suitable tool so that it can punch, puncture, cut, drill etc. an opening into the main pipeline. One or more such tools can be provided as part of an end effector assembly, for example at the end of an articulated robotic arm of the handling means.

Preferably, the connector apparatus can form the connection between main pipeline and feeder line in such a way that water is prevented or at least inhibited from entering the pipeline(s), so that less effort is required to remove such water before commissioning the pipeline for the transportation of gas.

Prior to the step of coupling a feeder line to the main pipeline, the handling means can be operated to attach a buoyancy aid to the feeder line so that the feeder line is suspended in the water at a suitable height, allowing the handling means to more easily complete the connection procedure. When not in use, a buoyancy aid can be "parked" by attaching it to the pipeline connector apparatus.

It is known to lay a subsea pipeline by transporting it - rolled on a large drum - using a marine vessel, and paying it out to a subsea pipe-laying apparatus that travels on the seabed. An example of such a subsea pipe-laying apparatus is a "subsea plough" which can be equipped with various tools and actuators. A plough can be provided for forming a furrow or channel, a guide for laying the pipeline in the channel, a yoke for connection to a pulling means, etc.

In a preferred embodiment of the invention, the pipeline connector apparatus is configured to follow such a subsea plough that is being deployed to lay the main pipeline. In this embodiment, the pipeline connector apparatus has its own means of transport so that it can follow the subsea plough. For example, the subsea plough can be towed by a marine vessel, and the pipeline connector apparatus is also towed by the same vessel. The pipeline connector apparatus can move alongside the plough, i.e. in parallel or in tandem with the plough, for example.

In a further preferred embodiment of the invention, the pipeline connector apparatus can be mounted on a subsea plough, so that the subsea plough transports the pipeline connector apparatus.

It may be desirable for the inventive pipeline connector apparatus to connect multiple feeder lines to a main pipeline, for example in a single procedure carried out over one or more days. To this end, the pipeline connector apparatus preferably comprises a depot to accommodate a suitable number of couplers. The handling means is preferably configured to retrieve a coupler from the coupler depot. For example, the depot can be an open-sided container large enough to accommodate the required number of couplers, and the handling means can be configured to reach into the container, grasp a coupler, and transfer the coupler to a suitable position in readiness to make the connection between feeder line and main pipeline.

The feeder lines may have been deposited near the base of the respective supporting structures in a preceding step, for example when a supporting structure is installed, a feeder line may be "parked" at its base in readiness for the later connecting procedure. Alternatively, to reduce the overall effort involved, it may be preferable to provide the feeder lines during the pipeline connection procedure. To this end, in a further preferred embodiment of the invention, the pipeline connector apparatus preferably comprises a depot to accommodate a suitable number of feeder lines. For example, a bundle of feeder lines may be arranged in a suitable holding assembly that is buoyant and is attached to the pipeline connector apparatus. Alternatively, one or more lengths of feeder line can be coiled on a drum that is mounted onto the pipeline connector apparatus. When the connector apparatus has reached a connection site along the main pipeline, the handling means retrieves a feeder line from the feeder line depot and arranges the first end of that feeder line to abut the main pipeline at the connection site.

A feeder line is used to for connect the main pipeline to the gas generation plant at a level higher up inside the supporting structure. In a preferred embodiment of the invention, the pipeline connector apparatus is configured to arrange a feeder line inside the supporting structure so that it can be later connected to the gas generation plant. To this end, the handling means of the inventive pipeline connector apparatus is preferably configured to insert a second end ("upper end") of a feeder line into an opening at the base of a supporting structure of an offshore facility. In a preferred embodiment of the invention, the handling means is realized to continue pushing a feeder line into the supporting structure until one end of the feeder line has reached an upper level of the supporting structure, i.e. to a height above sea-level. The handling means can bring the upper end of the feeder line to the level of a hang-off at the top of the supporting structure. That end of the feeder line can later be connected to the electrolytic apparatus. The handling means can push the feeder line into the supporting structure until only a relatively short end remains protruding from the opening, i.e. the end that is connected to the main pipeline. In this way, the inventive pipeline connector apparatus can prepare the entire pipeline and feeder line infrastructure without the need for human intervention, for example there is no need for divers or other trained personnel to bring the upper end of the feeder line to the top of the supporting structure.

In a further preferred embodiment of the invention, the pipeline connector apparatus is realized to close any gap between the feeder line and the opening in the supporting structure. This can be done by installing a suitable seal, for example. The gap is closed in order to prevent the exchange of water between the interior and the exterior of the supporting structure. As a result, the oxygen content in the water inside the supporting structure can deplete, with the benefit of reducing corrosion in the interior of the supporting structure.

The inventive pipeline connector apparatus can be realised as an essentially autonomous apparatus. For example, the pipeline connector apparatus can be equipped with sensors that can locate a connection site, the base of a supporting structure, an opening in a supporting structure, etc. This can be achieved for example by sonar, radar, position tracking, etc., allowing the apparatus to "see" even in dark and murky conditions near the seabed. The pipeline connector apparatus can be programmed to perform a certain sequence of steps in response to a certain event. For example, after detecting a feeder line at the base of a supporting structure and locating one end, the handling means can be actuated to reach out and grasp that end of the feeder line and to bring it into position relative to the main pipeline in readiness for the coupling procedure.

Alternatively, the inventive pipeline connector apparatus can be equipped with a communication means and control interface so that all steps of the pipeline connection procedure can be controlled from a support vessel, for example.

The pipeline connector apparatus is preferably equipped with a jetting apparatus. Such a jetting apparatus may be used for example to bury the feeder line to some extent under the seabed (for protection) after the feeder line has been coupled to the main pipeline. Equally, if the main pipeline was laid in a previous procedure, a jetting apparatus may be deployed to uncover the main pipeline about the connection site so that a feeder line can be coupled to the main pipeline at that site.

The pipeline connector apparatus is preferably configured to arrange a concrete mattress to protect a feeder line. A concrete mattress can have been deposited at the base of the supporting structure in a previous step. During the feeder line connection procedure, the handling means of the pipeline connector apparatus can be controlled to re-arrange the concrete mattress so that this will optimally protect a feeder line. Here also, the handling apparatus may first attach one or more buoyancy aids to the concrete mattress before moving it, in order to reduce the load on the handling apparatus.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an offshore wind-driven electrolysis facility;
Figure 2 illustrates a stage during the inventive method;
Figure 3 shows a coupler in place about the main pipeline during the inventive method;
Figure 4 shows an exemplary embodiment of the invention;
Figure 5 shows a further stage during the inventive method.

In the diagrams, like numbers refer to like objects throughout. Objects in the diagrams are not necessarily drawn to scale.

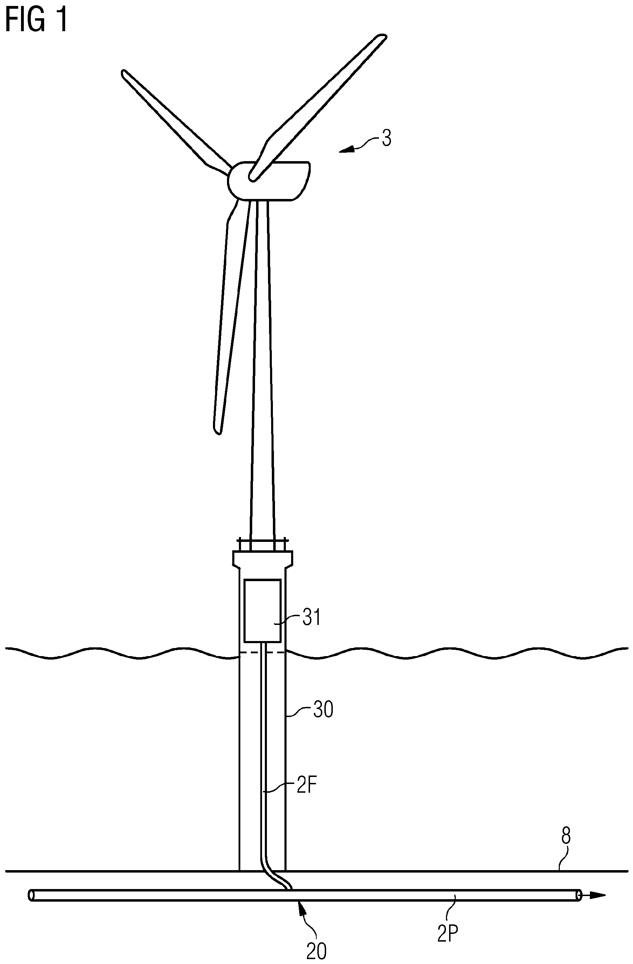

Figure 1 shows an offshore wind-driven electrolysis facility 3. This comprises a wind turbine that generates electricity to drive an electrolysis plant 31. Gas produced by the electrolysis plant 31 is exported via a feeder line 2F that connects to a main pipeline 2P, shown here to be buried below the level of the seabed 8. The wind turbine is mounted on a hollow supporting structure 30, and the feeder line 2F extends through this supporting structure 30, emerging at the level of the seabed 8. The invention proposes an economical and safe way of forming a connections between the main pipeline 2P and feeder lines 2F of such offshore facilities.

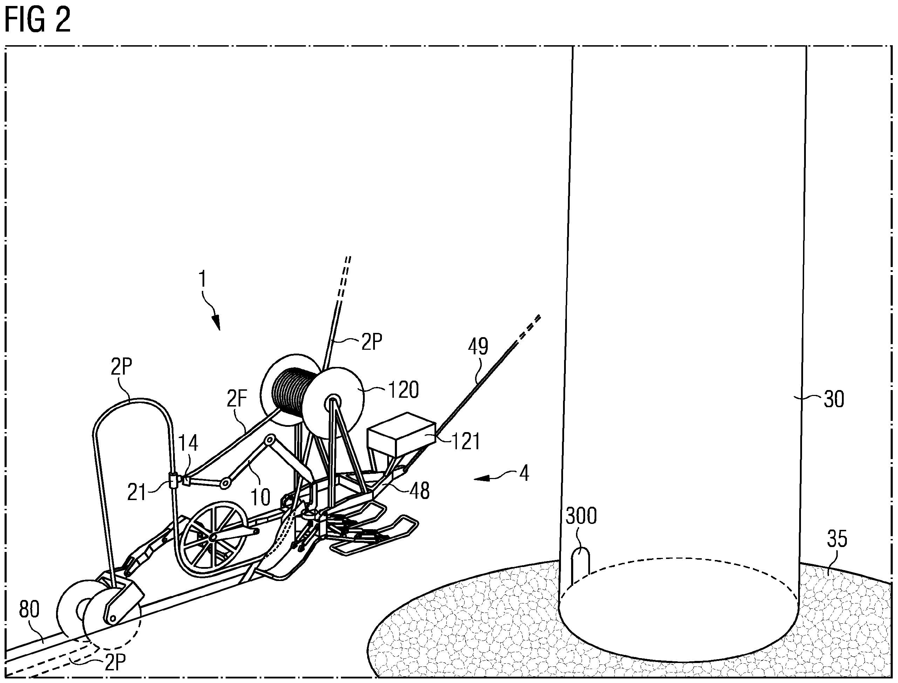

Figure 2 illustrates a stage during the inventive method. The diagram shows a subsea plough 4 of the type that is used to plough a channel in the seabed 8 and to simultaneously lay a pipeline 2P. The pipeline 2P is fed from a support vessel (not shown), and the support vessel also tows the subsea plough 4 by means of a cable 49 attached to a yoke 48.

In this exemplary embodiment, the subsea plough 4 also carries the inventive subsea pipeline connector apparatus 1. For simplicity, the diagram shows only the handling means 10, represented here by a robotic arm 10 with an end effector for manipulating a coupler 21. The handling means can be assumed to be operated by a controller (not shown) which can be part of the connector apparatus 1, or which may be remote and which may communicate with the connector apparatus 1 using any suitable communications channel. The connector apparatus 1 may also be assumed to comprise various sensors, for example one or more sensors that can be used to determine the position of the connector apparatus 1 relative to a supporting structure 30.

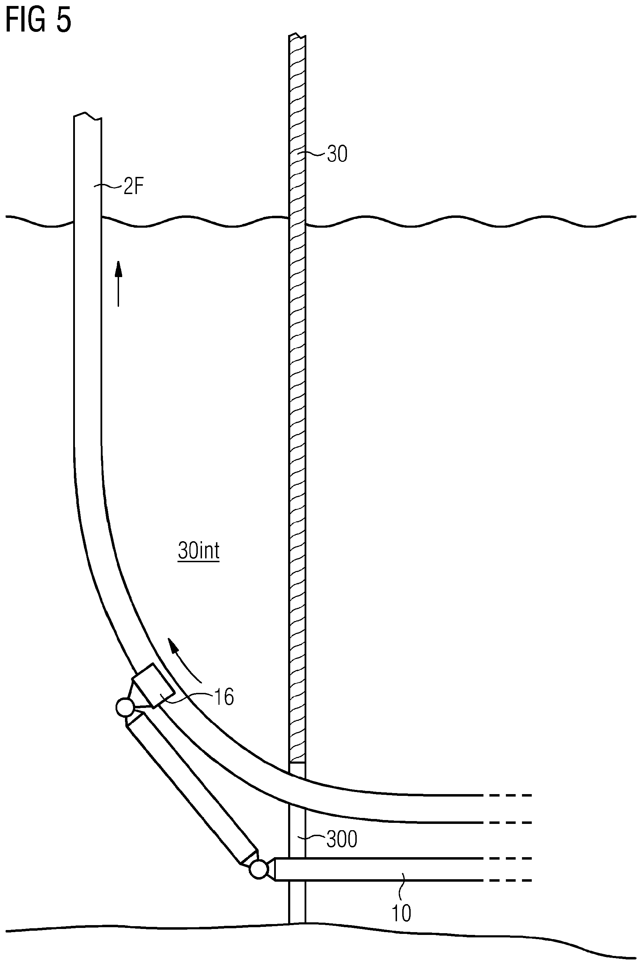

In this embodiment, the handling means 10 is equipped with one or more suitable end effectors (not shown) to retrieve a feeder line 2F from a feeder line depot 120 so that one end of the feeder line can be connected to the main pipeline 2P as shown here. The handling means 10 is also equipped with one or more suitable end effectors (not shown) that can be deployed to push the other "upper" end of the feeder line 2F into the supporting structure. The feeder line 2F will enter the supporting structure 30 through an opening 300 at the base of the supporting structure 30. The step of pushing the feeder line 2F into the supporting structure 30 can be facilitated by the handling means 10 as will be explained in Figure 5 below.

The handling means 10 is also equipped with one or more suitable end effectors (not shown) to retrieve a coupler 21 from a coupler depot 121 and to manipulate it into place about the main pipeline 2P.

The diagram also shows scour protection 35 about the base of the supporting structure 30. A concrete mattress can have been arranged near the base of the supporting structure 30 in a previous step , and the handling means 10 can lift or otherwise manipulate the concrete mattress to place it over the exposed end of the feeder line 2F.

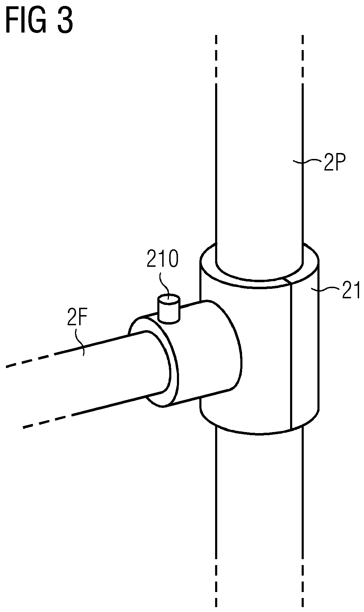

Figure 3 shows a coupler 21 in place about the main pipeline 2P. The coupler 21 may be assumed to comprise one or more valves in its interior to ensure that gas flows only in one direction. Here, the coupler 21 is an electrofusion transition saddle that is clamped about the main pipeline 2P at a connection site. The handling means 10 is also configured with one or more suitable end effectors with tools to grasp a feeder line 2F and to insert its first end into the outwardly extending portion of the coupler 21. The connecting means 14 (indicated here only in a very schematic fashion), which can be part of an end effector, and is configured to apply an electric current to the weld port 210 of the coupler 21 in order to fuse the feeder line 2F to the coupler 21.

The interior surfaces of any or all of the coupler 21, feeder line 2F and main pipeline 2P may be lined with a suitable material. For example, a lining of polyethylene and a thin layer of aluminium can ensure a gas-tight hydrogen pipeline. Preferably, the coupler 21 is realised to seal the layers at any junction to the feeder line 2F and main pipeline 2P.

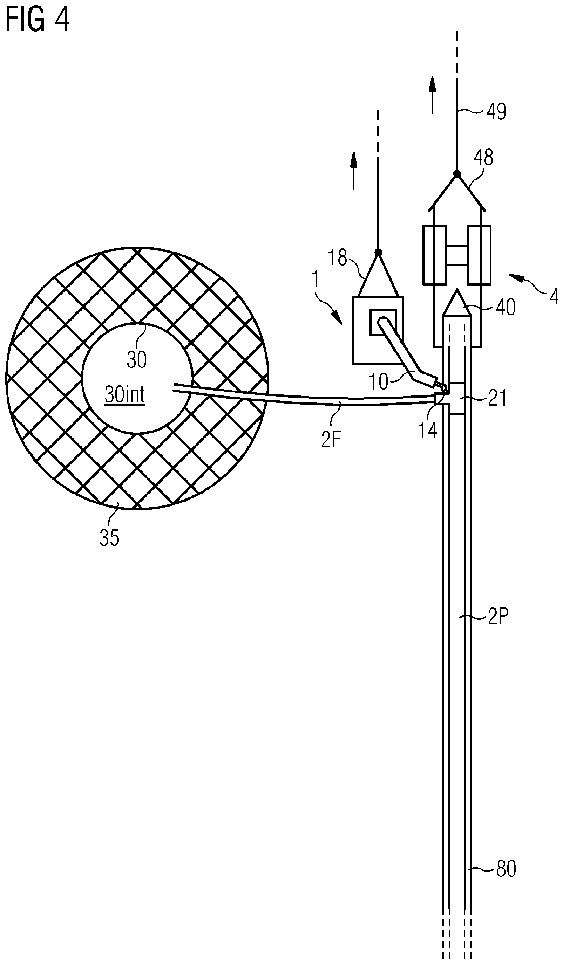

Figure 4 is a simplified schematic showing a plan view of a further embodiment of the invention. Here, the inventive subsea pipeline connector apparatus 1 is realised to be towed alongside a subsea plough, and has a yoke 18 for attaching to a tow cable that is pulled by a support vessel (not shown). As the subsea plough 4 lays the main pipeline 2P in the ploughed channel 80, the pipeline connector apparatus 1 observes the environment in order to identify a connection site 20. This can be done by means of one or more sensors that detect a supporting structure 30. In a similar fashion, a previously deposited feeder line 2F can be identified. When a supporting structure 30 and feeder line have been identified, the pipeline connector apparatus 1 locates a suitable connection site 20 along the pipeline 2P, and then proceeds to form a connection between the feeder line 2F and the main pipeline 2P.

Figure 5 shows a simplified schematic of a further aspect of the invention. The diagram shows a feeder line 2F being pushed into the interior of the supporting structure 30. To aid the passage of the feeder line 2F, the handling means 10 of the pipeline connector apparatus 1 is realised to position the upper end of the feeder line 2F in the opening 300 at the base of the supporting structure 30, and then to push the feeder line 2F inwards until the upper end of the feeder line 2F has reached the top level of the supporting structure 30. This can be facilitated by a suitable end effector 16 that can push the feeder line 2F along, for example by an end effector 16 comprising an arrangement of one or more motor-driven friction rollers. The handling means 10 is preferably realised to manipulate a feeder line 2F in such a way that the feeder line 2F is never bent beyond its minimum bending radius (MBR). The buoyancy of the feeder line itself may be sufficient to make it rise through the interior 30ᵢₙₜ of the water-filled supporting structure, alternatively the upper end of the feeder line 2F may be connected to a buoyancy device.

Although the present invention has been disclosed in the form of preferred embodiments and variations thereon, it will be understood that numerous additional modifications and variations could be made thereto without departing from the scope of the invention. For example, the inventive subsea pipeline connector apparatus can be equipped with a means of logging or recording the entire procedure so that the installation may be certified at a later date.

For the sake of clarity, it is to be understood that the use of "a" or "an" throughout this application does not exclude a plurality, and "comprising" does not exclude other steps or elements.

## Claims

1. A subsea pipeline connector apparatus (1) for connecting subsea feeder lines (2F) to a main pipeline (2P), comprising
- a means of conveying the pipeline connector apparatus (1) to a feeder line connection site (20) of the main pipeline (2P);
- a handling means (10) configured to arrange a first end of a feeder line (2F) to abut the main pipeline (2P) at the connection site (20);
- a connecting means (14) realised to connect a coupler (21) at the junction of that feeder line (2F) and the main pipeline (2P).

2. A subsea pipeline connector apparatus according to the preceding claim, wherein the handling means (10) is configured to place a coupler (21) about the main pipeline (2P) at a connection site (20).

3. A subsea pipeline connector apparatus according to any of the preceding claims, wherein a coupler (21) comprises an electrofusion coupler, and the connecting means (14) is realised to apply an electric current to a metal coil embedded in the electrofusion coupler (21).

4. A subsea pipeline connector apparatus according to any of the preceding claims, realised to form an opening in the main pipeline (2P).

5. A subsea pipeline connector apparatus according to any of the preceding claims, comprising a depot (121) to accommodate a plurality of couplers (21), and wherein the handling means (10) is configured to retrieve a coupler (21) from the depot (121).

6. A subsea pipeline connector apparatus according to any of the preceding claims, comprising a depot (120) to accommodate a plurality of feeder lines (2F), and wherein the handling means (10) is configured to retrieve a feeder line (2F) from the depot (120).

7. A subsea pipeline connector apparatus according to any of the preceding claims, wherein the handling means (10) is configured to insert a second end of a feeder line (2F) into an opening (300) at the base of a supporting structure (30) of an offshore facility (3).

8. A subsea pipeline connector apparatus according to any of the preceding claims, wherein the handling means (10) comprises an end effector (16) adapted to push a feeder line (2F) into the supporting structure (30).

9. A subsea pipeline connector apparatus according to any of the preceding claims, wherein the handling means (10) comprises an articulated arm (10) terminating in an end effector comprising a number of tools (14, 16).

10. A subsea pipeline connector apparatus according to any of the preceding claims, comprising a means of identifying a connection site (20) of the main pipeline (2P).

11. A subsea pipeline connector apparatus according to any of the preceding claims, comprising a communication means for communication with a support vessel (5).

12. A subsea pipeline connector apparatus according to any of the preceding claims, configured to follow a subsea plough (4) being deployed to lay the main pipeline (2P).

13. A subsea pipeline connector apparatus according to any of the preceding claims, configured for mounting onto a subsea plough (4).

14. A method of connecting a number of subsea feeder lines (2F) to a main pipeline (2P) using the subsea pipeline connector apparatus (1) of claims 1 to 13, which method comprises the steps of
- conveying the subsea pipeline connector apparatus (1) to a feeder line connection site (20) of the main pipeline (2P) ;
- operating the handling means (10) to arrange a first end of the feeder line (2F) to abut the main pipeline (2P) at the connection site (20);
- operating the connecting means (14) to couple that feeder line (2F) to the main pipeline (2P).

15. A method according to the preceding claim, comprising a step of forming an opening (22) in the main pipeline (2P) at the junction between a feeder line (2F) and the main pipeline (2P).
